# DEMANDE DE BREVET EUROPEEN

(11) **EP 1 161 110 A1**
(43) Date de publication de la demande: **05.12.2001**
(21) Numéro de dépôt: 01401289.2
(22) Date de dépôt: 17.05.2001
(51) Int. Cl.: H04Q 7/32, G07F 7/10

(54) **Procédé et dispositif de verrouillage d'une opération mettant en oeuvre deux identifiants**

(30) Priorité: 30.05.2000 FR 0006957
(71) Demandeur: ALCATEL, 75008 Paris (FR)
(72) Inventeur: Durand, Romain, 75008 Paris (FR); Pellegrinelli, Jean-Luc, 75011 Paris (FR)
(74) Mandataire: Lamoureux, Bernard

(57) **Abrégé**

Procédé de verrouillage d'une opération ou d'un service, mettant en oeuvre un premier identifiant, comportant des premières informations aptes à être lues par des premiers moyens de lecture disposés dans un terminal de radiocommunication, et un second identifiant comportant des secondes informations aptes à être lues par des seconds moyens de lecture associés au terminal, comportant les étapes de :
- Calcul de premières données à partir des premières et secondes informations lues sur les identifiants;
- Comparaison des premières données calculées avec des secondes données stockées dans une zone mémoire de l'ensemble terminal-seconds moyens de lecture ;
- Autorisation de l'opération mettant en oeuvre les deux identifiants selon le résultat de la comparaison.

## Description

La présente invention concerne un procédé et un dispositif de verrouillage d'une opération mettant en oeuvre deux identifiants, tels qu'une carte utilisateur de services de télécommunications et une carte bancaire par exemple, un premier identifiant étant susceptible d'être disposé dans un terminal de radiocommunication et un second identifiant apte à être inséré dans un lecteur associé au terminal.

L'invention concerne plus particulièrement le domaine des terminaux de radiocommunication cellulaire fonctionnant par exemple, mais pas exclusivement, selon le standard appelé GSM.

Pour pouvoir utiliser un terminal, l'utilisateur doit placer dans celui-ci un identifiant comportant différentes informations telles que le numéro d'abonné ou des données relatives à l'opérateur de télécommunications par exemple.

Dans le cas du standard GSM, l'identifiant est une carte d'utilisateur appelée carte SIM (pour "Subscriber Identity Module" ou module d'identité du souscripteur) fournie par un opérateur, comportant un numéro international (ou numéro IMSI) ainsi que des données propres à l'opérateur aptes à être lues par des moyens de lecture disposés au sein même du terminal.

Avec l'important essor des technologies de radiocommunication, de nouvelles applications et de nouveaux services voient le jour, en liaison notamment avec ce que l'on nomme le commerce électronique.
L'éventail des possibilités offertes à l'utilisateur d'un terminal de radiocommunication est de plus en plus large. Outre pouvoir émettre et recevoir des données (vocales ou autres), l'utilisateur pourra, par exemple, payer des achats par l'intermédiaire de son terminal.

Pour cela, le terminal doit être associé à un lecteur apte à déchiffrer les informations contenues sur un second identifiant qui peut être par exemple une carte bancaire (à puce ou à piste).

Dans le cadre d'applications différentes, d'autres cartes contenant des informations personnelles sur l'utilisateur sont susceptibles d'être utilisées telles que les cartes de santé, porte-monnaie électroniques, cartes de fidélité...

Le lecteur lié à la seconde carte, différent des moyens de lecture de la carte SIM qui sont propres au terminal, peut être associé au terminal selon différentes techniques connues. Le lecteur consiste en un accessoire totalement indépendant et relié au terminal (par un câble ou directement sur un port dudit terminal), ou peut être intégré au terminal ou bien encore être associé à une batterie de rechange permettant l'alimentation électrique du terminal.

Dans le cas particulier des cartes bancaires, l'utilisateur qui souhaite effectuer un paiement via son terminal de radiocommunication introduit sa carte dans le lecteur associé au terminal puis saisi son code personnel associé à son compte bancaire. Le terminal, associé au lecteur de carte, joue ainsi le rôle de terminal de paiement.

Certains lecteurs de type connu sont dédiés à un type de terminal particulier. A un terminal donné correspond un lecteur spécifique qui ne peut être utilisé avec aucun autre modèle de terminal.

Dans le cas où un opérateur ou une institution, telle qu'une banque par exemple, souhaiterait proposer à ses clients des nouveaux services liés à l'utilisation de cette technologie, elle a tout intérêt à fournir à ses clients un type de lecteur de carte fonctionnant avec différents modèles de terminal tout en souhaitant réserver l'utilisation de ces lecteurs uniquement aux services qu'elle offre.

Dans le cadre d'opérations commerciales communes, un opérateur de télécommunications peut se lier à un autre prestataire de services tel qu'une banque ou autre afin d'offrir ces nouveaux services.

Cependant, leur client, lorsqu'il utilise la carte SIM de l'opérateur, ne doit pouvoir utiliser que la carte bancaire émise par la banque pour pouvoir accéder aux services offerts en commun par l'opérateur et la banque.

Les lecteurs et terminaux connus ne permettent pas de réserver leur utilisation exclusive à un opérateur, un prestataire de services ou toute autre entité donnée.

Dans ce contexte, la présente invention a pour but de pallier ces inconvénients en proposant un procédé permettant d'empêcher l'utilisation des services du ou des fournisseurs du lecteur ou de l'ensemble terminal-lecteur si le couple de cartes, dans le lecteur et dans le terminal, n'est pas celui prévu par le ou les fournisseurs, sans pour autant bloquer le lecteur ou le fonctionnement normal du terminal.
A cette fin, selon l'invention, le procédé de verrouillage d'une opération ou d'un service, mettant en oeuvre un premier identifiant, comportant des premières informations aptes à être lues par des premiers moyens de lecture disposés dans un terminal de radiocommunication, et un second identifiant comportant des secondes informations aptes à être lues par des seconds moyens de lecture associés au terminal, comporte les étapes de :
- Calcul de premières données à partir des premières et secondes informations lues sur les identifiants ;
- Comparaison des premières données calculées avec des secondes données stockées dans une zone mémoire de l'ensemble terminal-seconds moyens de lecture ;
- Autorisation de l'opération mettant en oeuvre les deux identifiants selon le résultat de la comparaison.

Avantageusement, les étapes de calcul, de stockage et de comparaison des premières et secondes données sont réalisées par des moyens intégrés au terminal de radiocommunication ou aux seconds moyens de lecture.

De préférence, le stockage des premières données est réalisé lors d'une étape de personnalisation du terminal ou des seconds moyens de lecture, le procédé comportant en outre une étape de vérification de l'état d'activation du verrouillage de l'opération avant d'effectuer les étapes de calcul et de comparaison.

Selon une forme préférée de réalisation, le premier identifiant, apte à être lu par le terminal de radiocommunication, est une carte utilisateur, du type carte SIM, le second identifiant, apte à être lu par les seconds moyens de lecture associés au terminal, étant une carte du type carte à puce ou à piste magnétique.

L'invention concerne également un dispositif permettant la réalisation d'une opération ou l'utilisation d'un service mettant en oeuvre deux identifiants, ledit dispositif comprenant un terminal de radiocommunication, comportant des premiers moyens de lecture aptes à lire des premières informations provenant d'un premier identifiant, associé à des seconds moyens de lecture aptes à lire des secondes informations provenant d'un second identifiant, caractérisé en ce qu'il comporte des moyens :
- de calcul de premières données à partir des premières et secondes informations lues sur les identifiants ;
- de comparaison des premières données calculées avec des secondes données stockées dans des moyens de stockage de l'ensemble terminal-seconds moyens de lecture.

Avantageusement, les moyens de calcul, de stockage et de comparaison des premières et secondes données sont intégrés soit au terminal de radiocommunication soit aux seconds moyens de lecture.

Selon une forme particulière de réalisation, les premier et second identifiants sont respectivement une carte utilisateur du type carte SIM et une carte à puce ou à piste magnétique.

L'invention sera mieux comprise à la lumière de la description qui suit se rapportant à un exemple de réalisation illustratif mais en aucun cas limitatif, en référence aux dessins annexés dans lesquels :
- la figure 1 est un schéma synoptique simplifié du dispositif selon l'invention mettant en oeuvre le procédé de verrouillage de l'invention ;
- la figure 2 est un organigramme du procédé de verrouillage selon l'invention ;
- la figure 3 est un détail de l'une des étapes du procédé de la figure 2.

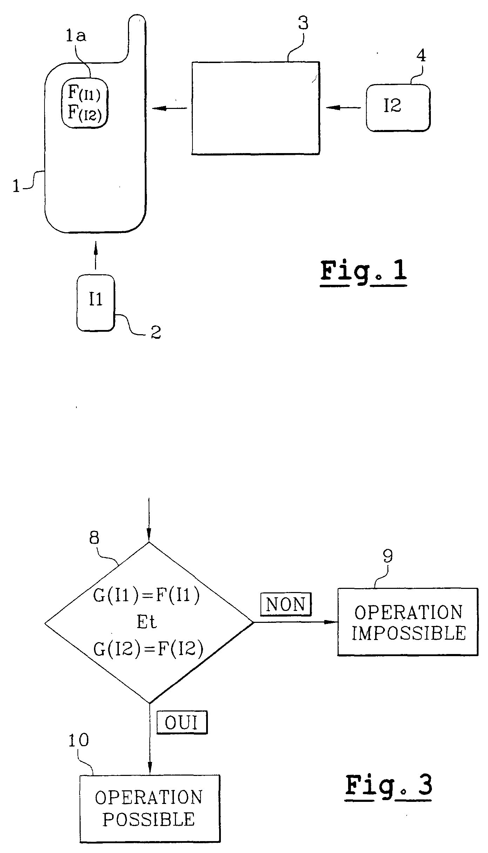

La figure 1 est un schéma synoptique simplifié de l'ensemble du dispositif mettant en oeuvre le procédé selon l'invention.

Cet ensemble comprend un terminal de radiocommunication 1 de type connu, apte à recevoir un identifiant 2 du type carte SIM.

Le terminal 1 comporte des moyens de lecture non représentés et connus en eux-mêmes destinés à lire les premières informations I1 contenues dans la carte SIM 2.

Le terminal 1 est, en outre, apte à être associé de façon connue à des seconds moyens de lecture 3 d'un second identifiant 4.

Dans le cas de la figure 1, les seconds moyens de lecture sont constitués d'un lecteur apte à lire les secondes informations I2 contenues dans le second identifiant 4. Ce second identifiant 4 peut être constitué, par exemple, d'une carte à puce, à piste magnétique ou tout autre module susceptible de contenir des secondes informations I2. Nous considérerons, pour le reste de la description, le cas d'une carte à puce.

Dans la forme de réalisation représentée à la figure 1, le terminal 1 comporte en outre une zone de mémoire 1a apte à stocker des premières données F(I1) et F(I2) relatives respectivement aux premières et secondes informations I1 et I2.

Le stockage de ces premières données F(I1) et F(I2) pourrait, selon une autre forme de réalisation, être effectué dans une zone de mémoire disposée dans le lecteur 3.

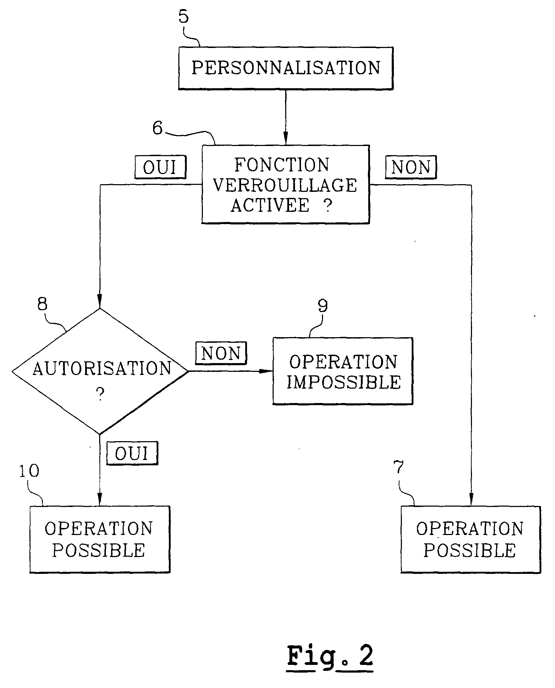

Les premières données F(I1) et F(I2) sont établies à partir des premières et secondes informations I1 et I2 provenant de la carte SIM 2 et de la carte à puce 4 selon un algorithme prédéterminé et défini lors d'une étape de personnalisation détaillée lors de la description de la figure 2.

Le terminal 1 comporte également des moyens de calcul associés à une fonction de calcul G, ainsi que des moyens de comparaison, connus en eux-mêmes et non représentés, et qui seront détaillés en liaison avec la figure 2.

Dans la forme de réalisation où le lecteur 3 comporte une zone de mémoire apte à stocker les premières données F(I1) et F(I2), ledit lecteur 3 comporte un microcontrôleur afin de réaliser les étapes de calcul et de comparaison détaillées figure 2 et 3.
La figure 2 représente un organigramme du procédé selon l'invention.

Ledit procédé comporte une première étape de personnalisation 5 au cours de laquelle les premières données F(I1) et F(I2) sont stockées dans la zone de mémoire 1a du terminal 1 (ou dans une zone mémoire du lecteur 3 selon la forme de réalisation choisie).

Selon le type de données qui doivent être stockées, cette étape de personnalisation 5 peut être réalisée lors de la fabrication dudit terminal 1 ou ultérieurement, par exemple lors de la première mise en service du terminal 1.

Les premières données stockées F(I1) et F(I2) dépendent directement des premières et secondes informations I1 et I2 qui seront lues à partir de la carte SIM 2 et de la carte à puce 4.

Les informations lues I1 et I2, tout comme les données stockées F(I1) et F(I2), peuvent être soit très générales, telles que le type d'opérateur ou le nom de la banque émettrice de la carte à puce 4 par exemple, soit très particulières telles que le nom du titulaire de la carte SIM 2 et/ou de la carte à puce 4.

Dans le cas où les informations à stocker sont d'un type très général, l'étape de personnalisation 5 peut être réalisée très en amont, par exemple au cours de la fabrication. Si les informations sont plus précises, l'étape 5 de personnalisation est effectuée en aval de la fabrication.

Selon une forme avantageuse de réalisation, le procédé selon l'invention comporte en outre une étape de vérification de l'état d'activation de la fonction verrouillage de l'opération mettant en oeuvre la carte SIM 2 et la carte à puce 4.

L'activation ou la désactivation de la fonction verrouillage peut être réalisée par l'intermédiaire de tous moyens connus, tels que par exemple la saisie d'un code sur le clavier du terminal 1 ou directement par l'opérateur par l'intermédiaire du réseau de radiocommunication.

Dans le cas où la fonction de verrouillage n'est pas activée, l'opération mettant en oeuvre les deux identifiants, à savoir la carte SIM 2 et la carte à puce 4, est réalisable à tout instant et ce quelles que soient les premières et secondes informations I1 et I2 contenues dans la carte SIM 2 et la carte à puce 4.

En effet, le dispositif composé du terminal 1 associé au lecteur 3 ne fait aucune discrimination parmi les identifiants. Quelles que soient les premières données F(I1) et F(I2) stockées dans le terminal 1, l'opération est autorisée, même si les premières et secondes informations lues sur la carte SIM 2 et la carte à puce 4 ne correspondent pas aux premières et secondes informations I1 et I2.

Dans le cas où la fonction de verrouillage est activée, alors le procédé selon l'invention fait intervenir une phase d'autorisation 8.

La phase d'autorisation 8, qui sera décrite plus en détail en liaison avec la figure 3, est une phase de décision durant laquelle se déroulent différentes étapes aboutissant éventuellement à l'autorisation de l'opération.

Dans le cas où l'autorisation est refusée, alors l'opération mettant en oeuvre la carte SIM 2 conjointement avec la carte à puce 4 est impossible à réaliser (étape 9).

Dans le cas, par exemple, où la carte à puce 4 est une carte bancaire, l'opération est alors typiquement une opération de paiement. Le paiement ne peut être effectué si la carte bancaire 4 n'est pas la bonne.

En effet, si cette carte bancaire 4 n'est pas celle prévue pour fonctionner avec la carte SIM 2 lues par le terminal 1, les secondes informations I2 qu'elle contient n'étant pas les bonnes, elles ne seront pas reconnues par le dispositif.

Inversement, si la carte bancaire 4 contient les bonnes secondes informations 12 mais que la carte SIM 2 ne contient pas les bonnes premières informations I1, alors l'opération mettant en oeuvre les deux identifiants 2 et 4 ne peut pas être effectuée (étape 9).

Dans le cas où le couple d'identifiants, dans notre exemple le couple carte SIM 2 et carte à puce 4, est correct, l'autorisation est accordée lors de la phase d'autorisation 8. L'opération mettant en oeuvre la carte SIM 2 couplée à la carte à puce 4 est donc possible (étape 10).

La figure 3 détaille la phase de décision 8 de la figure 2.

Cette phase de décision comporte une étape de calcul de secondes données calculées G(I1) et G(I2). Cette étape de calcul fait intervenir une fonction de calcul G utilisant les premières et secondes informations I1 et I2 lues sur la carte SIM 2 et la carte à puce 4, l'une associée au terminal, l'autre associée au lecteur.

La fonction de calcul G peut être établie de façon connue par tout algorithme donné. Dans la forme de réalisation décrite, cette fonction de calcul est intégrée au terminal 1 mais pourrait également être intégrée au lecteur 3.

### Le procédé de verrouillage fonctionne alors de la façon suivante :

La carte SIM 2, contenant les premières informations I1, est insérée dans le terminal 1 tandis que la carte à puce 4, contenant les secondes informations I2, est insérée dans le lecteur 3, associé au terminal 1.

Le terminal 1 contient, dans une zone de mémoire 1a, des premières données stockées F(I1) et F(I2) relatives aux premières et aux secondes informations contenues dans les identifiants 2 et 4.

Grâce à leurs moyens de lecture respectifs, le terminal 1 ainsi que le lecteur 3 traitent les premières et secondes informations I1 et I2 des premiers et seconds identifiants 2 et 4.

Le terminal 1 calcule ensuite, par l'intermédiaire de la fonction de calcul G, des secondes données G(I1) et G(I2). Ces données calculées G(I1) et G(I2) sont ensuite comparées aux données stockées F(I1) et F(I2).

En cas d'égalité, le terminal 1 associé au lecteur 3 considère que la bonne carte SIM 2 ainsi que la bonne carte à puce 4 ont été insérées et autorise alors l'opération mettant en oeuvre les deux identifiants 2 et 4 (étape 10).

Dans le cas où, soit G(I1) est différent de F(I1), soit G(I2) est différent de F(I2), alors le terminal 1 n'autorise pas l'opération car l'un des deux identifiants, soit la carte SIM 2, soit la carte à puce 4 n'est pas celui qu'attend le dispositif (étape 9).

Ainsi, grâce au procédé de verrouillage selon l'invention, une opération mettant en oeuvre deux identifiants tels qu'une carte SIM 2 et une carte à puce 4 ne peut être effectuée que si le couple d'identifiants (2, 4) correspond à celui attendu par le dispositif.

Si l'un des deux identifiants (2, 4) ne contient pas les bonnes informations (I1, I2) alors le terminal 1, associé au lecteur 3, n'autorise pas l'opération et donc l'utilisation du service nécessitant la présence simultanée des deux identifiants.

Il est à noter qu'un verrouillage de la seconde carte (bancaire par exemple) n'empêche pas l'utilisation du radiotéléphone en temps que téléphone (sous réserve que la carte SIM ne soit pas bloquée ou verrouillée).

## Revendications

1. Procédé de verrouillage d'une opération ou d'un service, mettant en oeuvre un premier identifiant (2), comportant des premières informations (I1) aptes à être lues par des premiers moyens de lecture disposés dans un terminal de radiocommunication (1), et un second identifiant (4) comportant des secondes informations (I2) aptes à être lues par des seconds moyens de lecture (3) associés au terminal (1), comportant les étapes de :
- Calcul de premières données G(I1), G(I2) à partir des premières et secondes informations (I1, I2) lues sur les identifiants (2, 4) ;
- Comparaison des premières données calculées G(I1), G(I2) avec des secondes données stockées F(I1), F(I2) dans une zone mémoire (1a) de l'ensemble terminal-seconds moyens de lecture ;
- Autorisation de l'opération mettant en oeuvre les deux identifiants (2, 4) selon le résultat de la comparaison.

2. Procédé selon la revendication 1, **caractérisé en ce que** les étapes de calcul, de stockage et de comparaison des premières et secondes données F(I1), F(I2) et G(I1), G(I2) sont réalisées par des moyens intégrés au terminal de radiocommunication (1).

3. Procédé selon la revendication 1, **caractérisé en ce que** les étapes de calcul, de stockage et de comparaison des premières et secondes données F(I1), F(I2) et G(I1), G(I2) sont réalisées par des moyens intégrés aux seconds moyens de lecture (3).

4. Procédé selon l'une des revendications précédentes, **caractérisé en ce que** le stockage des premières données F(I1), F(I2) est réalisé lors d'une étape de personnalisation (5) du terminal (1) ou des seconds moyens de lecture (3).

5. Procédé selon l'une des revendications précédentes, **caractérisé en ce qu'**il comporte en outre une étape de vérification de l'état d'activation du verrouillage (6) de l'opération avant d'effectuer les étapes de calcul et de comparaison.

6. Procédé selon l'une des revendications précédentes, **caractérisé en ce que** le premier identifiant (2), apte à être lu par le terminal de radiocommunication (1), est une carte utilisateur, du type carte SIM.

7. Procédé selon l'une des revendications précédentes, **caractérisé en ce que** le second identifiant (4), apte à être lu par les seconds moyens de lecture (3) associés au terminal de radiocommunication (1), est une carte du type carte à puce ou à piste magnétique.

8. Dispositif permettant le verrouillage d'une opération ou d'un service mettant en oeuvre un premier et un second identifiant (2, 4), comprenant un terminal de radiocommunication (1) comportant des premiers moyens de lecture aptes à lire des premières informations (I1) provenant du premier identifiant (2), associé à des seconds moyens de lecture (3) aptes à lire des secondes informations (I2) provenant du second identifiant (4), **caractérisé en ce qu'**il comporte des moyens :
- de calcul de premières données G(I1), G(I2) à partir des premières et secondes informations (I1, I2) lues sur les identifiants (2, 4) ;
- de comparaison des premières données calculées G(I1), G(I2) avec des secondes données stockées F(I1), F(I2) dans des moyens de stockage (1a) de l'ensemble terminal-seconds moyens de lecture.

9. Dispositif selon la revendication précédente, **caractérisé en ce que** les moyens de calcul, de stockage et de comparaison des premières et secondes données F(I1), F(I2) et G(I1), G(I2) sont intégrés au terminal de radiocommunication (1).

10. Dispositif selon la revendication 8, **caractérisé en ce que** les moyens de calcul, de stockage et de comparaison des premières et secondes données F(I1), F(I2) et G(I1), G(I2) sont intégrés aux seconds moyens de lecture (3).

11. Dispositif selon l'une des revendications 8 à 10, **caractérisé en ce que** les premier et second identifiants (2, 4) sont respectivement une carte utilisateur du type carte SIM et une carte à puce ou à piste magnétique.
